# FASCICULE DE BREVET EUROPEEN

(11) **EP 0 792 423 B1**
(45) Date de publication et mention de la délivrance du brevet: **03.03.1999**
(21) Numéro de dépôt: 95940291.8
(22) Date de dépôt: 08.11.1995
(51) Int. Cl.: F16F 9/30, F16F 9/348, E01D 19/06, E04H 9/02

(54) **DISPOSITIF AMORTISSEUR DU TYPE A COMPRESSION HYDROSTATIQUE D'ELASTOMERE ET SES APPLICATIONS**
DÄMPFENDE VORRICHTUNG MIT HYDROSTATISCHEM ZUSAMMENDRÜCKEN EINES ELASTOMERS UND DEREN ANWENDUNGEN
SHOCK-ABSORBING DEVICE USING A HYDROSTATICALLY COMPRESSIBLE ELASTOMER, AND USES THEREOF

(30) Priorité: 14.11.1994 FR 9413618
(43) Date de publication de la demande: 03.09.1997
(73) Titulaire: JARRET, 92600 Asnières (FR)
(72) Inventeur: DOMANGE, Bruno, F-78600 Maisons-Lafitte (FR)
(74) Mandataire: Lerner, François
(86) Numéro de dépôt international: FR9501475
(87) Numéro de publication internationale: WO9615389

(56) Documents cités:
- DE-A- 3 041 549
- DE-A- 3 508 574
- DE-A- 3 842 158
- GB-A- 1 033 810
- GB-A- 1 137 219
- GB-A- 2 277 571
- US-A- 5 265 392

## Description

L'invention a pour objet un dispositif formant amortisseur et/ou ressort amortisseur du type utilisant au moins un piston qui se déplace dans un cylindre rempli d'une gomme élastomère qui y est prisonnière sous pression et dont l'effet d'amortissement/rappel est essentiellement assuré par la compression de l'élastomère et son laminage dans le cylindre lors du déplacement du piston.

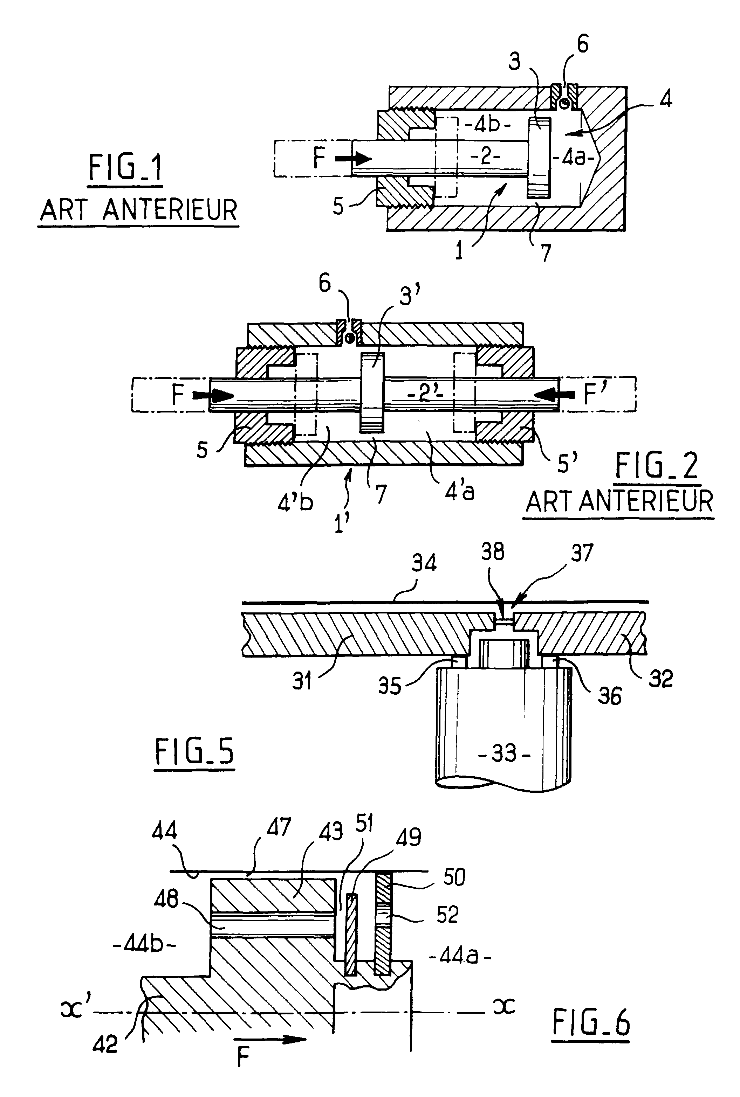

Dans ce type de dispositif de l'art antérieur, dont le principe pour une meilleure compréhension de l'invention, a été illustré en relation avec les figures 1 et 2, l'enfoncement du piston référencé 1 constitué de la tige de piston 2 et du plongeur ou de la tête de piston 3, se déplace à l'intérieur d'une chambre 4 de cylindre enfermant un élastomère à haute viscosité.

La tige 2, 2' du piston coulisse de façon étanche dans une bague de guidage 5 (figure 1) formée dans la partie arrière de la chambre ou dans deux bagues de guidage 5,5' (figure 2) prévues aux deux extrémités de la chambre. En 6, a été indiqué le clapet de remplissage permettant le remplissage de la chambre 4 avant le premier usage.

Lorsque le piston 1 se déplace dans le cylindre 4, la tête du piston 3 divise la chambre en deux parties 4a, 4b, 4'a, 4'b qui communiquent par un passage annulaire 7 ou par des orifices de fuite (non représentés) réalisés dans le plongeur, formant trajet de fuite et de laminage pour l'élastomère.

Avec le genre d'élastomère utilisé, et pour le mode de réalisation illustré à la figure 1, dans lequel la tige de piston 2 ne traverse pas de part en part la chambre 4, on note que pour une pression variant par exemple entre 1 et 4 000 bars, la réduction de volume de l'élastomère peut être de l'ordre de 15 %.

Dans le mode de réalisation de la figure 2, dans lequel la tige de piston 2' traverse de part en part la chambre 4 qui est obturée à ses deux extrémités par les bagues de guidage 5, 5', respectivement, il n'y a pas de modification du volume lors de l'actionnement du piston.

L'enfoncement du piston, sous un effort statique ou dynamique, provoque simultanément des frottements visqueux au niveau de la circulation de l'élastomère de la chambre 4a à la chambre 4b, et des frottements solides au niveau du piston 2, 2' et des bagues 5, 5' sous l'effet de la pression des joints d'étanchéité (non représentés) qui agit sur le piston.

Les frottements solides sont d'autant plus conséquents que la pression est élevée. Les frottements visqueux qui sont engendrés par le laminage de l'élastomère à travers le jeu annulaire plongeur/réservoir ou à travers les passages prévus dans le piston sont d'autant plus importants que la vitesse de déplacement du piston est élevée.

Dans le mode de réalisation de la figure 1, si l'effort F sur la tige de piston 2 décroit ou cesse, l'élastomère se détend et ramène le piston vers sa position d'origine. Le retour complet est assuré grâce à la pression initiale qui sert, entre autres, à vaincre les frottements solides.

Le fonctionnement d'un tel dispositif amortisseur formant également ressort de rappel peut être déterminé de façon précise par le calcul ou l'expérience et en fonction notamment :
- de la nature de l'élastomère utilisé (et notamment de sa viscosité plus ou moins importante),
- de l'importance du jeu laissé entre la tête du piston et le cylindre dans lequel il coulisse,
- de la longueur de la course de déplacement du piston,
- de la pression de compression initiale de remplissage de la chambre, etc.

Dans le mode de réalisation de la figure 2, étant donné que l'enfoncement de la tige de piston 2' dans un sens ou dans l'autre ne modifie pas le volume laissé à l'élastomère dans la chambre 4, il n'y a pas de fonction "ressort de rappel", le dispositif fonctionnant symétriquement selon que la force est appliquée au dispositif dans le sens de la flèche F ou dans le sens de la flèche F'.

Mais de tels dispositifs ne permettent pas de réaliser une transition d'effort, notamment en fonction de la vitesse.

L'objet de l'invention est de modifier les systèmes existants en leur permettant de réagir de façon très différente en fonction des vitesses de déplacement piston/cylindre auxquelles ils peuvent être soumis.

Pour modifier le fonctionnement du dispositif amortisseur en fonction des chocs qu'il doit absorber et qui sont plus ou moins importants, il est déjà connu de prévoir dans le piston des orifices de passage pour la gomme, lesquels orifices peuvent être obturés par des clapets élastiques ou non, rappelés ou non par des ressorts.

Un tel dispositif est connu du document DE-A-3 041 549.

Mais les dispositifs connus ne permettent pas, jusqu'à un premier seuil de fonctionnement du dispositif de n'opposer qu'une force minimale de réaction, et dès qu'un seuil de vitesse de déplacement déterminé est dépassé de réagir de façon quasi instantanée, en délivrant la force maximale d'encaissement que le dispositif est susceptible de fournir.

De façon plus précise, le dispositif conforme à l'invention formant amortisseur de chocs et limiteur de mouvements du type utilisant au moins un piston qui se déplace dans un cylindre rempli d'une gomme élastomère sous pression élevée, dont l'effet d'amortissement et éventuellement de rappel est essentiellement assuré par la compression de l'élastomère et son laminage dans des passages de section réduite ménagés dans le dispositif pour permettre le passage de la gomme d'un côté à l'autre du piston lors du fonctionnement du dispositif, le dispositif comportant en outre des moyens, tels notamment que des clapets qui, lorsqu'ils sont actionnés, réduisent ou laissent libre la section des passages susmentionnés, ce dispositif se caractérise en ce que au dessus d'un seuil de vitesse déterminé de déplacement du piston dans le cylindre, le dispositif réagit de façon quasi instantanée en délivrant la force maximale d'encaissement qu'il est susceptible de fournir, tandis que pour certaines au moins des valeurs inférieures à ce seuil, le dispositif n'oppose qu'une force minimale de réaction.

Le dispositif objet de l'invention permet ainsi d'atteindre des applications tout à fait nouvelles du système dans le domaine des très hautes énergies, et notamment dans le domaine des ouvrages d'art, ponts et bâtiments, en offrant des protections parasismiques, dans le domaine ferroviaire pour encaisser des efforts transmis à la voie par un convoi freinant brutalement ou dans le cas d'accidents.

Parmi les avantages du dispositf de l'invention, on note notamment une très grande fiabilité dans le temps, une miniaturisation du système, ainsi qu'une tenue excellente sur une très large plage de températures, par exemple de l'ordre de -25°C à +40°C.

L'invention, sa mise en oeuvre et ses applications apparaîtront plus clairement à l'aide de la description qui va suivre faite en référence aux dessins annexés, dans lesquels :
la figure 1 illustre, comme indiqué précédemment, le principe de fonctionnement d'un dispositif formant amortisseur à effet de ressort de rappel, à compression hydrostatique d'élastomère de l'art antérieur ;
la figure 2 montre un autre dispositif amortisseur de l'art antérieur à piston traversant ne présentant pas d'effet de ressort de rappel ;
la figure 3 montre en coupe axiale un dispositif de l'art antérieur modifié selon l'invention ;
la figure 4 montre à plus grande échelle le détail entouré IV à la figure 3 ;
la figure 5 montre schématiquement une application de l'invention à la stabilité d'un tablier de pont de chemin de fer reposant sur des piles ;
la figure 6 montre une autre variante de réalisation ;
la figure 7 montre des courbes illustrant, en fonction de la course de déplacement du piston (piston non traversant) et de sa vitesse de déplacement dans le cylindre, comment peut évoluer la force de réaction dans un tel dispositif, construit par exemple conformément au mode de réalisation de la figure 3 ;
la figure 8 montre une autre variante de réalisation à piston traversant ;
la figure 9 illustre dans un diagramme force/jeu de passage de la gomme, comment fonctionne le dispositif de l'invention lorsqu'il est soumis à des conditions de fonctionnement différentes ;
la figure 10 montre une variante de réalisation pour un dispositif similaire à celui de la figure 8 ;
la figure 11 montre des courbes donnant en fonction de la vitesse de déplacement piston/cylindre portée en abscisses en mm/mn, la force de réaction du dispositif portée en ordonnées en kN (kilo Newton).

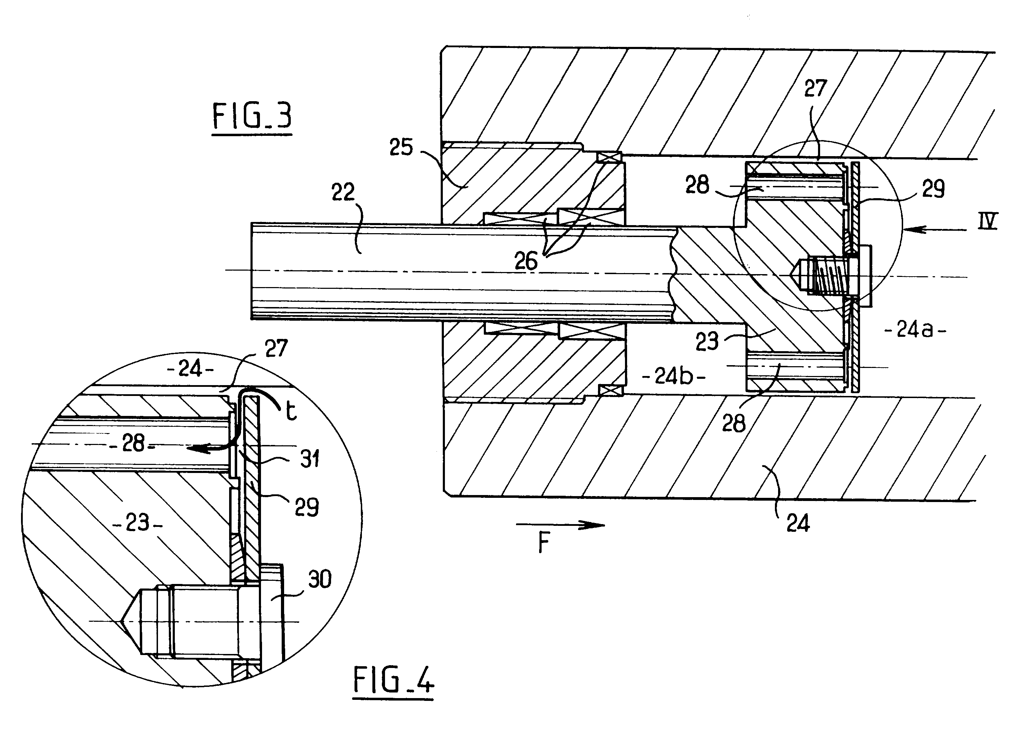

Ayant déjà décrit le fonctionnement des dispositifs de l'art antérieur illustrés aux figures 1 et 2, on décrira maintenant la réalisation d'un dispositif modifié tel qu'illustré à la figure 3.

On retrouve la tige de piston 22 avec sa tête 23 se déplaçant dans un cylindre 24. La tige de piston 22 coulisse dans le cylindre 24 au moyen d'une bague de guidage 25, par exemple vissée dans le cylindre 24.

Des garnitures d'étanchéité 26 empêchent les fuites d'élastomère entre la bague 25 et la chambre du cylindre 24.

Pour le passage de l'élastomère de part et d'autre de la tête 23 du piston a été prévu un jeu annulaire 27, dont la valeur est déterminée pour fournir l'effet de laminage souhaité.

Comme dans l'art antérieur des modes de réalisation des figures 1 et 2, les deux chambres 24a, 24b, séparées dans le cylindre 24 par la tête 23 du piston, peuvent, dans certaines conditions, communiquer entre elles par des passages 28 formés dans la tête de piston de part en part.

Ces passages, non illustrés aux figures 1 et 2, sont classiquement prévus et peuvent être équipés de clapets généralement élastiques.

A la figure 3, on aperçoit ainsi, en avant des passages 28, une rondelle métallique 29, plus précisément visible à la figure 4, placée devant les passages, et maintenue sur la tête de piston par exemple au moyen d'une vis 30.

Lors du fonctionnement du dispositif, le piston 22, 23 se déplace dans le sens de la flèche F.

Dans la position de repos du dispositif illsutrée aux figures 3 et 4, et comme on le voit plus clairement à la figure 4, l'élastomère contenu dans le cylindre peut passer librement de la chambre 24a à la chambre 24b, non seulement par le passage 27 annulaire, mais également et surtout par les passages 28 selon le trajet de fuite de la flèche t sous la rondelle 29 qui laisse entre elle et la face avant du piston un jeu référencé 31 à la figure 4.

Conformément à l'invention, la rondelle 29 n'est pas une rondelle élastique au sens où on l'entend habituellement, étant constituée en acier d'épaisseur relativement importante, comme il sera indiqué plus précisément ci-après.

Selon l'épaisseur de la rondelle qui sera soigneusement choisie en fonction du seuil de fonctionnement désiré du dispositif, comme il sera expliqué plus précisément ci-après, à la suite d'un effort plus ou moins important appliqué sur elle, la rondelle sera plaquée contre la face avant du piston 23 obturant dans ce cas les orifices 28.

La réalisation est telle que le dispositif fonctionnera en quelque sorte par tout ou rien, amortissant très peu les efforts si la rondelle n'est pas plaquée contre les passages, et les amortissant considérablement si la rondelle est plaquée sur la face avant du piston, le plaquage de la rondelle contre la face avant du piston s'effectuant quasiment instantanément à partir du moment où l'effort, et de façon plus générale la vitesse, de sollicitation sur le dispositif augmente en dépassant un seuil prédéterminé.

Le dispositif correspond donc en quelque sorte à un dispositif de l'art antérieur et qui a été modifié de telle manière qu'il n'entre en ligne d'action pratiquement qu'à partir d'un seuil minimum déterminé, en deça duquel il est quasiment inopérant, et au delà duquel il entre quasiment instantanément en actionnement à son niveau de fonctionnement prédéterminé.

Un tel dispositif peut notamment être utilisé sur des dispositifs de sécurité devant entrer en action lorsque des chocs d'intensité supérieure à un certain seuil apparaissent.

Les applications sont nombreuses, notamment dans les transports ferroviaires, pour les ouvrages d'art, pour des amortissements de chocs de machines ou d'engins très lourds, pour réaliser des protections parasismiques de bâtiments, pour des travées de pont, etc.

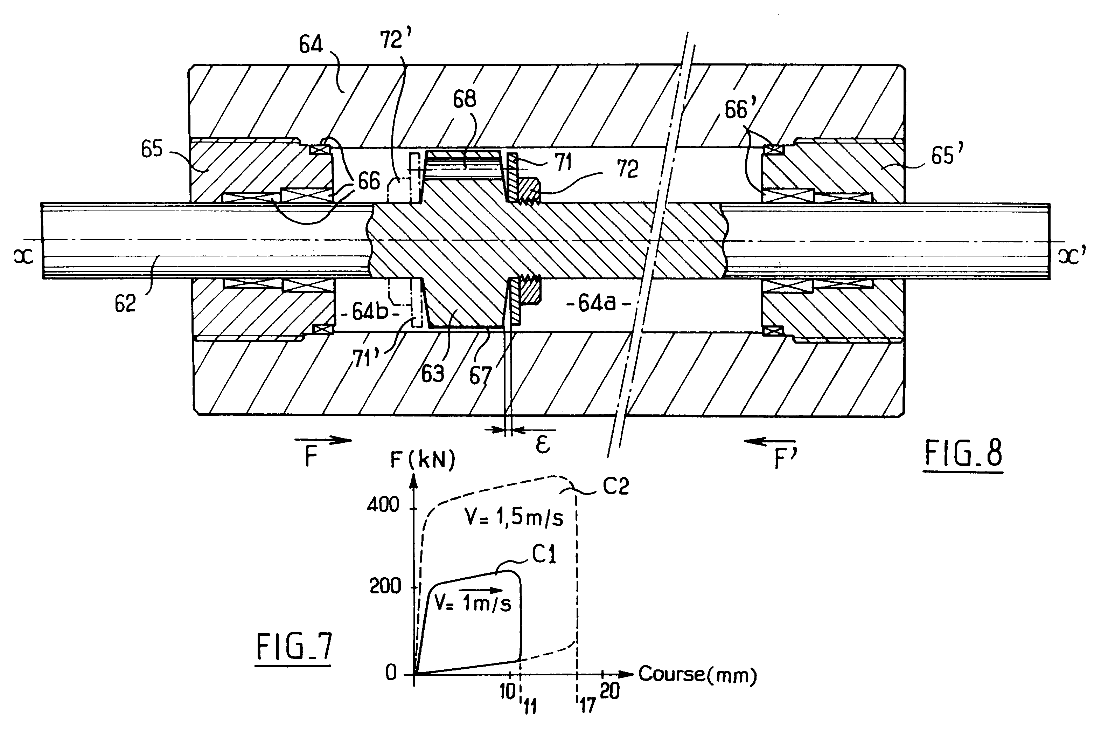

Ainsi, à la figure 5, on a illustré une application particulière à la stabilité d'un ouvrage tel qu'un pont de chemin de fer constitué de plusieurs traverses montées bout à bout et reposant sur des piles.

Pour ne pas surcharger le dessin, on a illustré à la figure 5 seulement les parties adjacentes de deux tabliers 31, 32 d'un pont reposant sur une pile 33, le tablier supportant lui-même une voie, par exemple de chemin de fer 34.

Comme il est bien connu, il faut permettre aux tabliers, qui sont généralement métalliques, de se dilater librement en fonction des variations de température auxquelles ils peuvent être soumis.

A cet effet, les tabliers reposent sur la pile 33 au moyen d'appuis, tels que les appuis schématisés en 35 et 36.

Un intervalle 37 sépare les deux tabliers de façon à permettre le jeu de dilatation requis.

Le problème est que, par exemple, si un convoi de chemin de fer engagé sur le pont doit freiner brutalement, l'énergie cinétique de freinage renvoyée sur la voie risque de provoquer un basculement des piles du pont qui vont être soumises à l'effort d'entraînement qui leur est transmis par le tablier.

Conformément à l'invention, le problème est résolu en plaçant, entre les éléments de tablier adjacents, des dispositifs de couplage 38 constitués par des dispositifs formant amortisseurs conformes à l'invention et par exemple du type illustré aux figures 3 et 4.

Le fonctionnement de l'ensemble est le suivant.

En fonctionnement normal, aucun effort particulier n'étant transmis aux tabliers, les éléments de couplage 38 n'encaissent pas d'effort. Les rondelles élastiques 29 des dispositifs des figures 3 et 4 constituant les coupleurs 38 sont au repos, et tout se passe comme si, en pratique, les coupleurs n'existaient pas, les chemins de passage 28 de l'élastomère dans les amortisseurs ayant été largement dimensionnés.

Les éléments de tablier peuvent donc se dilater librement selon les conditions de température régnant sur le pont, les efforts de dilatation étant très importants, mais les vitesses de déplacement extrêmement réduites par exemple inférieures à 1 mm/mn.

Au contraire, en cas de freinage brutal d'un convoi sur le pont, le tablier par réaction va être entraîné à une certaine vitesse, par exemple supérieure à 3 mm/mn qui va être suffisante pour actionner en fermeture quasiment instantanément la rondelle 29 du dispositif coupleur associé.

Dans ces conditions, et de proche en proche, tous les coupleurs du tablier étant sollicités en fermeture, le tablier du pont réagit à une telle sollicitation comme s'il était constitué d'une seule pièce unique allant jusqu'aux culées du pont.

En conséquence, les piles ne sont pas sollicitées.

Dans un autre montage, on pourrait ramener les forces subies par un tablier sur les piles en montant le dispositif amortisseur entre l'extrémité du tablier et la pile qui le supporte.

Dans un tel montage, l'effort de freinage sera réparti en cascade de pile en pile de façon à le répartir sur un nombre de piles suffisant pour encaisser l'effort.

On notera que selon le type d'ouvrage, le seuil indiqué de fonctionnement du clapet en fermeture du dispositif pourra être plus important que celui indiqué, par exemple 30 mm/mn, voire 300 mm/mn.

Les caractéristiques de fonctionnement du dispositif seront choisies en correspondance.

En se référant maintenant à la figure 6, on a illustré une autre variante encore dans laquelle une tête de piston 43, se déplaçant dans un cylindre 44 avec un jeu annulaire 47, comporte des passages 48 formés à travers lui.

En avant de ces passages, sont disposées deux rondelles élastiques légèrement distantes l'une de l'autre 49 et 50.

La rondelle 49 est pleine et laisse un certain jeu de passage 51 derrière elle avec les passages 48, tandis que la rondelle 50 est perforée comme on le voit en 52.

Le fonctionnemnt du dispositif, le piston se déplaçant dans le sens F, est le suivant.

Lorsque la vitesse de déplacement est faible, les rondelles restent dans la position illustrée de sorte qu'un grand passage est laissé à l'élastomère, rendant le dispositif très peu efficace, voire inexistant.

Pour une vitesse de déplacement un peu plus importante, la rondelle 49 va venir se plaquer contre la face avant du piston 43 obturant les passages 48.

L'élastomère a tendance à passer de la chambre 44a à la chambre 44b essentiellement par les passages 52 et le passage annulaire 47 ; on se retrouve sensiblement dans la situation de fonctionnement d'un dispositif amortisseur de l'art antérieur tel qu'illustré à la figure 1.

Néanmoins, compte-tenu de la conformation particulière de la rondelle épaisse 49, la modification de fonctionnement du système est effectuée brutalement, le dispositif passant d'un seuil d'effort minimum à un second seuil déterminé.

Ceci apparaîtra plus clairement ci-après en relation avec les courbes de fonctionnement illustrées.

Pour une vitesse encore plus importante, la rondelle 50 va elle aussi fléchir, et les passages 52 seront obturés (par application contre la rondelle 49).

Dans ces conditions, l'élastomère va s'écouler plus difficilement de la chambre 44a à la chambre 44b en devant emprunter successivement le passage annulaire qui lui est offert entre la rondelle 50 et la paroi cylindrique 44 de la chambre et le passage annulaire 47.

Le dispositif va donc fonctionner avec deux niveaux de fermeture succédant à un niveau de non intervention.

Bien entendu, le dessin de la figure 6 est schématique et les espacements entre les rondelles ont été exagérés de façon à illustrer plus clairement le système ; dans la pratique, ils seront beaucoup plus réduits de façon à permettre le fonctionnement du dispositif tel que décrit ci-dessus.

Bien qu'à la figure 6, on ait illustré schématiquement deux rondelles espacées superposées, un dispositif de fonctionnement équivalent pourrait être formé en utilisant à la place de rondelles circulaires, des lamelles rectilignes disposées en éventail autour de la tige de piston et qui viendraient obturer les orifices formés en regard.

Par exemple, deux telles lamelles montées en croix pourraient venir obturer la première deux orifices 48 disposés en opposition, et la seconde deux autres orifices 48 disposés également diamétralement en opposition (pour des raisons d'équilibrage), les deux lamelles ayant des flexibilités différentes, par exemple en prenant pour l'une une épaisseur d'acier de 2 mm et pour l'autre, une épaisseur d'acier de 3,5 mm.

Un tel dispositif fonctionnant avec deux niveaux de fermeture succédant à un niveau de non intervention permettra la libre dilatation du système pour un faible niveau de vitesse, un amortissement avec un effort déterminé pour un second seuil de vitesse, et un quasi blocage pour un troisième seuil de vitesse supérieur.

En se reportant à la figure 7, on a illustré les courbes de fonctionnement d'un dispositif conforme à l'invention, dans lequel la force de réaction du dispositif varie considérablement selon la vitesse d'application du choc au dispositif.

Pour une vitesse d'application de 1 m/s, on a relevé 200 kN (Kilo Newton), et pour une vitesse de choc de 1,5 m/s, une force de 400 kN.

En abscisses, ont été représentées les courses en millimètres des dispositifs expérimentés lors des deux chocs.

Le dispositif en question était du type à un seuil illustré à la figure 3. On avait utilisé une rondelle métallique 29 en acier de type 35 NCD 16 (au nickel chrome, molybdène) de 5 mm d'épaisseur, avec un jeu axial entre rondelles et piston de 2 mm, le diamètre d'alésage de la chambre du cylindre 24 était de 103 mm et le diamètre de la tête de piston 23 était de 100 mm laissant donc un jeu annulaire 27 de 1,5 mm pour le laminage de la gomme lors du fonctionnement du dispositif.

La tête du piston 23 était perforée par trois passages 28 régulièrement répartis (donc à 120°C les uns des autres) autour du piston, le diamètre de chaque passage 28 étant de 24 mm et le centre de chaque passage étant situé à 80 mm de l'axe central x'x du dispositif. Le diamètre enfin de la tige 22 du piston était de 42 mm.

Revenant à la figure 7, on observe que le dispositif réagit très rapidement, passant d'un seuil d'effort de 200 kN pour V = 1 m/s à 400 kN pour une vitesse de 1,5 m/s.

Les courbes de la figures 7 illustrent également, après cessation de l'effort, le retour du dispositif à son état de repos par décompression de l'élastomère (cas d'un piston non traversant).

Pour un piston traversant, les courbes seraient modifiées en se sens qu'il n'y aurait pas de force de rappel par décompression de l'élastomère assurant le retour du système.

Une application du dispositif à ce cas de figure pourrait être celui de l'accostage de wagons de chemin de fer.

Pour une vitesse de déplacement de 1 m/s, on se trouver sur la courbe C1, le fonctionnement correspondant à un laminage de la gomme passant parallèlement dans le passage annulaire 27 et par les passages 28.

Pour une vitesse supérieure de sollicitation du dispositif, par exemple pour une vitesse d'accostage de 1,5 m/s, la réaction du dispositif est illustrée par la courbe C2. L'effort appliqué par l'élastomère a fait fléchir la rondelle 29 obturant les passages 28, l'élastomère ne pouvant plus passer que par le jeu annulaire laissé entre la chambre et la périphérie du piston 23.

La figure 7 fait apparaître clairement l'avantage du dispositif de l'invention qui permet pratiquement dès le début de la course de faire fonctionner le dispositif sous l'effort d'encaissement maximum souhaité, ce qui accroit l'efficacité du dispositif.

On se reportera maintenant à la variante de réalisation à piston traversant illustrée à la figure 8.

A cette figure, on aperçoit un piston traversant avec sa tige 62 et sa tête 63 définissant dans le cylindre 64 deux chambres 64a, 64b pour l'élastomère.

Le piston 62 traverse les deux extrémités de la chambre 64 dans des bagues 65, 65' vissées à chaque extrémité du cylindre 64, les garnitures d'étanchéité 66, 66' évitant les fuites d'élastomère vers l'extérieur.

Chaque piston 63 comporte un certain nombre de passages axiaux 68, par exemple au nombre de trois, répartis à 120° autour de l'axe x'x du dispositif.

En face des passages 68, on aperçoit une rondelle 71 dont le fonctionnement est similaire à celui de la rondelle 29 des figures 3 et 4 ou de la rondelle 49 de la figure 6.

La rondelle 71 est maintenue en place sur la tête du piston au moyen d'un écrou 72 vissé sur une partie filetée correspondante de la tige 62 du piston.

Entre la rondelle 72 et la face en regard du piston 63 est laissé un jeu référencé ε sur le dessin, pour le passage de la gomme, ce jeu équivalent au jeu 31 de la figure 4 ou 51 de la figure 6.

Si le dispositif doit être à double effet, c'est-à-dire dans les deux sens, on prévoit avantageusement un montage symétrique autour de la tête 63 du piston avec une rondelle 71' et un écrou 72' comme indiqué en traits pointillés.

Dans la réalisation ici décrite, on notera que l'écrou 72 (72') forme un bouclier pour la rondelle 71 (71') lors de l'actionnement du système.

Pour des faibles vitesses de fonctionnement, et comme indiqué précédemment, les rondelles 71, 71' ne sont pratiquement pas déformées, que le dispositif se déplace dans le sens F ou dans le sens contraire F'.

Pour des vitesses de déplacement dépassant un certain seuil, la pression de l'élastomère sur les rondelles, selon le sens de déplacement (la rondelle 71 si le déplacement du piston se fait dans le sens F, ou la rondelle 71' si le piston se déplace dans le sens F') déforme la rondelle et la plaque contre les passages 68.

Cette action est quasi immédiate. En effet, compte-tenu de la viscosité importante des élastomères utilisés à partir d'un certain jeu inférieur à ε, la différence de pression entre les deux faces de la rondelle 71 augmente brutalement. La rondelle 71 est alors appliquée immédiatement contre la tête de piston 63.

Cette action est d'autant plus rapide que l'écrou 72 (72') placé devant la rondelle 71 (71') limite l'action de l'élastomère sur la périphérie libre de la rondelle ; dès que celle-ci a fléchi d'un certain jeu, les forces s'appliquent alors sur toute la surface de la rondelle.

On obtient ainsi un fonctionnement encore plus rapide du système qui passe brutalement d'un seuil de non intervention au niveau d'intervention déterminé.

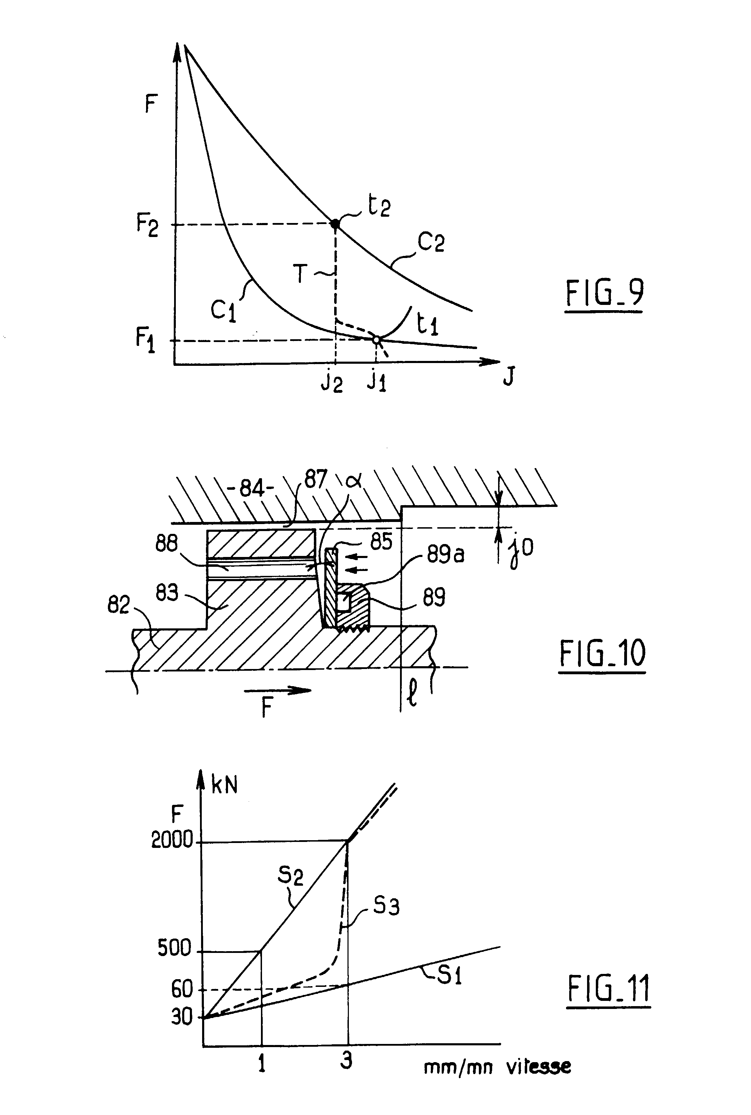

A la figure 9, on a illustré des courbes montrant comment fonctionne un dispositif du type décrit à la figure 3 en fonction des vitesses V1, V2 croissantes d'application de la force F agissant sur le système.

En abscisses, ont été portées les valeurs du jeu permettant le passage de la gomme, par exemple en termes de surface en mm² et en ordonnées les efforts de réaction, par exemple en Newton.

Aucune valeur n'a été indiquée, dans la mesure où les courbes illustrent un fonctionnement général du dispositif, les valeurs dépendant évidemment des dimensions choisies, de la nature de l'élastomère, des pressions auxquelles il est soumis, etc.

Les deux courbes C1 et C2 correspondent aux forces de réaction F de l'amortisseur pour les vitesses respectives de fonctionnement V1 et V2, et cela en fonction du jeu de passage laissé à la gomme.

La courbe T en trait tireté, indique la courbe obtenue avec le dispositif qui entraîne une réduction du jeu sous l'effet du fléchissement de la rondelle 29.

Les deux points t1 et t2 de la courbe T correspondent aux valeurs du jeu du dispositif pour les vitesses de fonctionnement V1 et V2.

Dans l'exemple donné, on a supposé qu'à la vitesse V1 première, la rondelle 29 n'avait pratiquement pas fléchi, tandis qu'à la vitesse V2, la rondelle 29 avait fléchi.

Comme expliqué précemment, le fléchissement des rondelles se fait brutalement, le dispositif fonctionnant en quelque sorte par tout ou rien pour chaque seuil de fonctionnement.

Le fonctionnement du dispositif se produit comme suit.

Pour une vitesse inférieure à V1, la rondelle 29 de la figure 3 n'a pas fléchi ; le jeu est maximal, et la force de réaction du dispositif est minimale ; tout se passe sensiblement comme si aucun dispositif d'amortissement n'était présent.

Pour une vitesse de sollicitation égale à V1, la rondelle 29 n'a pas fléchi et l'on se trouve au point tl de fonctionnement sur la courbe C1.

La force de réaction du dispositif s'effectue au niveau F1.

Pour une vitesse de sollicitation V2 supérieure à V1, la rondelle 29 fléchira. On passe ainsi rapidement du point tl au point t2 sur la courbe C2 où l'on peut relever en ordonnées la force de réaction F2 du dispositif pour le jeu J2.

Les courbes de la figure 9 permettent de comprendre que selon l'invention, il est ainsi possible d'adapter à volonté en fonction d'un paramètre variable, tel que la vitesse d'encaissement d'un choc auquel sera soumis le dispositif, par exemple une valeur de seuil maximal de l'effort qui devra être encaissé par le dispositif pour obtenir dans les meilleures conditions possibles l'encaissement du choc.

Dans l'exemple de l'accostage de wagons de chemin de fer, le dispositif pourra ainsi agir avec une force d'amortissement non-dommageable pour le personnel ou les marchandises transportées, jusqu'à un certain seuil de vitesse, et avec une force d'amortissement supérieure en cas d'accident grave de façon à réduire autant que faire se peut les dommages.

Dans une application à des ouvrages d'art, ou au parasismique, le dispositif utilisé sera généralement à un seul seuil, par exemple du type illustré aux figures 3, 4 et 8, permettant une libre dilatation et un libre mouvement pour des vitesses très faibles (généralement pour encaisser les jeux de dilatation thermiques) et fournissant par contre, pour une vitesse supérieure, dépassant un seuil déterminé, un encaissement au seuil maximum pouvant correspondre à un quasi blocage.

Par exemple, pour un dispositif comportant un piston et cylindre des dimensions sus-indiquées, et fonctionnant selon le principe des figures 3 ou 8 avec une seule rondelle d'acier d'épaisseur 3,5 mm, il a été possible d'obtenir un dispositif n'opposant pas de résistance notable pour des vitesses inférieures à 1 mm/mn et opposant par contre une force de réaction supérieure à 175 tonnes pour une vitesse de sollicitation supérieure à 3 mm/mn, le dispositif agissant quasi-instantanément avant qu'il n'ait effectué une course de 1mm.

Dans la variante de réalisation illustrée à la figure 10, une tige de piston 82 du dispositif (lequel a été ici illustré comme un dispositif traversant, comme celui de la figure 8), est équipée sur la face avant du dispositif (en supposant que F indique le sens de déplacement du piston dans le cylindre) d'une rondelle déformable 85, se trouvant en avant de passages 88 traversant la tête du piston.

En 87, on a référencé le jeu annulaire formé entre la chambre du cylindre 84 et la tête du piston assurant le laminage de la gomme comme dans le dispositif décrit précédemment.

La rondelle 85 est plaquée contre la face avant de la tête du piston 83, par exemple au moyen d'un écrou 89 formant en outre bouclier permettant d'adapter le dispositif à une vitesse de déclenchement déterminée et améliorant le fonctionnement par tout ou rien de la fermeture de la rondelle 85, comme expliqué précédemment.

Dans l'exemple illustré, on voit que la tête avant du piston est légèrement inclinée vers l'arrière en allant du centre vers la périphérie, de sorte que la rondelle 85 étant une rondelle plane, un jeu allant en croissant va être formé entre la rondelle 85 et la tête du piston, sous un angle aigu a qui peut être par exemple de l'ordre de 10°.

L'angle sert en fait à avoir un bon appui pour assurer une bonne tenue de la rondelle.

Avec un appareil de diamètre intérieur Ø = 170 mm, on obtient pour une vitesse d'actionnement supérieure à 5 mm/mn une force de réaction du dispositif de 1 750 kN, alors que pour une vitesse de sollicitation inférieure à 1 mm/mn, la force est réduite à 60 kN.

Comme indiqué précédemment, la rondelle ainsi conformée et appuyée par l'écrou 29 formant bouclier réagit quasi instantanément en flexion, de sorte que le dispositif passe quasiment sans transition d'une position dans laquelle il laisse effectuer une dilatation libre du système à une position dans laquelle il applique un effort maximum de réaction. L'écrou 89 formant bouclier peut avantageusement être conformé avec une gorge telle qu'illustrée 89a qui réduit le temps de réponse en actionnement du dispositif en favorisant dès le début du fléchissement de la rondelle l'établissement de la surpression de l'élastomère sous le bouclier.

Il est clair qu'avec une telle disposition, en choisissant convenablement la qualité de la rondelle 85, c'est-à-dire par exemple la nuance d'acier qui va la constituer et son épaisseur, et la dimension du bouclier éventuel, il est possible d'obtenir la flexion souhaitée de cette rondelle pour obturer, à une vitesse déterminée, les passages 88.

Pour le fonctionnement du dispositif de la figure 10, on retrouve des courbes tout à fait similaires à celles illustrées à la figure 9.

A la figure 10, on aperçoit en outre qu'à partir d'une certaine valeur de la course, référencée 1, le diamètre de la chambre 84 augmente légèrement, le jeu 87 annulaire augmentant parallèlement jusqu'à la valeur jo.

Si l'on adopte une telle disposition, en fin de course de fonctionnement du dispositif, l'effort maximal va donc diminuer ; une telle disposition peut être utile pour limiter l'effort après une certaine course et permettre un décollement de la rondelle plaquée contre la tête de piston lors du fonctionnement du système et donc un retour du système à sa position initiale.

Un tel dispositif pourra réagir par exemple en laissant la déformation s'effectuer sensiblement librement lorsque la vitesse ne dépassera pas un seuil déterminé, et en fournissant au contraire un effort considérable, sans déplacement significatif du piston dans son cylindre, dès que la vitesse dépassera la valeur de seuil qui pourra être choisie à volonté, par exemple dans une fourchette allant de 3 mm/mn (très faible vitesse) à 300 mm/mn (vitesse quelque peu plus importante), et ce, en fonction des applications.

Dans un exemple de mise en oeuvre, on a obtenu des forces de réaction du dispositif de l'ordre de 1 750 kN pour une valeur d'actionnement de la vitesse supérieure à 3 mm/mn avec un déplacement très limité de l'ordre de 1 à 3 mm, le même dispositif pour une vitesse de déplacement de l'ordre de 1 mm/mn laissant le dispositif se déplacer librement par exemple sur une course de 100 mm avec une force maximale de réaction ne dépassant pas 30 kN.

Parmi d'autres exemples d'application, on peut citer notamment les butées de suspension d'engins très lourds, tels que chars ou engins de travaux publics.

On notera que le fonctionnement des dispositifs de l'invention est effectif pour des variations de températures importantes, et que les pressions élevées utilisées de plusieurs centaines à plusieurs milliers de bars limitent la compressibilité des élastomères et donc le temps de réaction des dispositifs.

A la figure 11, on a illustré la courbe de réaction du dispositif pouvant être appliquée par exemple pour stabiliser un tablier de pont comme il a été expliqué en relation avec la description de la figure 5.

Dans cette figure, on a illustré en abscisses la vitesse de déplacement en mm/mn du piston dans son cylindre et en ordonnées la force de réaction en kN.

La courbe S1, qui est quasi linéaire, illustre la force de réaction d'un dispositif amortisseur tel par exemple que celui illustré à la figure 8 mais qui serait dépourvu de la rondelle formant clapet d'obturation référencée 71.

De la même façon, la courbe S2, quasi linéaire, illustre la réaction du même dispositif mais qui serait dépourvu des passages traversant la tête de piston référencés 68.

Avec un dispositif suivant le fonctionnement de la courbe S1, pour une vitesse de réaction de 3 mm/mn, on obtiendra une force maximale de réaction de l'ordre de 60 kN.

Avec un dipositif suivant le fonctionnement de la courbe S2, on obtiendra pour la vitesse de sollicitation de 3 mm/mn, une force de réaction de 2 000 kN, soit la force recherchée ; et pour une vitesse de déplacement de 1 mm/mn, correspondant à une vitesse usuelle de dilatation, la force de réaction du dispositif sera supérieure à 500 kN, ce qui sera inacceptable (on notera qu'à la figure 11, l'échelle des forces n'a pas été respectée pour plus de clarté de la représentation).

Avec le dispositif de l'invention, c'est-à-dire comportant des passages ménagés à travers le piston et comportant des clapets fonctionnant en tout ou rien, la courbe de fonctionnement devient la courbe S3 représentée en trait interrompu.

On note que la courbe S3 suit pratiquement la courbe S1 au départ, et lorsque la vitesse de sollicitation atteint 3 mm/mn, la courbe se déforme et rattrape en montant pratiquement à la verticale parallèlement à l'axe des ordonnées, la courbe S2.

Le système réagit donc au départ pour les faibles vitesses comme si les passages 68 à travers la tête du piston étaient libres, réagissant par contre brutalement et fonctionnant en ne laissant l'élastomère passer que par le passage annulaire entre piston et cylindre dès que la vitesse atteint ou dépasse 3 mm/mn.

Autrement dit, un tel dispositif pourra réagir par exemple en laissant la déformation s'effectuer sensiblement librement lorsque la vitesse ne dépassera pas un seuil déterminé, et en fournissant au contraire un effort considérable, correspondant à un quasi blocage et quasi immédiatement dès que la vitesse dépassera une vitesse de seuil qui pourra être choisie arbitrairement aussi faible que désirée.

Dans les exemples qui ont été donnés, les moyens de modification de la section de passage étaient des moyens résistants mécaniques déformables tels que des rondelles ou lamelles en acier qui réagissaient directement, selon leur configuration, en fonction des efforts de déformation et/ou de déplacement qui leurs étaient appliqués directement par l'élastomère.

Avantageusement, des moyens formant bouclier permettaient d'adapter l'effort à la rondelle ou lamelle et d'accroitre cet effort dès le début de déformation du moyen résistant afin d'accélérer le processus de fermeture des clapets ainsi constitués.

On peut bien entendu prévoir aussi, éventuellement en complément, que ces moyens de modification de la section de passage sont des moyens pouvant être commandés de l'extérieur ou par des dispositfs de commande ou de contrôle quelconques programmés.

Par exemple, ces moyens pourraient être des clapets commandés de l'extérieur par des détecteurs associés au dispositif et qui fermeraient les clapets partiellement ou totalement en fonction des mesures relevées.

L'avantage du dispositif de l'invention est que quelle que soit l'importance du choc en question, le dispositif peut revenir à sa position de départ et n'est pas détruit par le choc.

En particulier pour la protection contre les tremblements de terre, le dispositif pourra amortir non seulement la première onde sismique, mais après coup, ses répliques.

Dans les divers exemples donnés et illustrés, on a montré essentiellement en tant que moyens de modification de la section de passage, des rondelles métalliques de qualité et de conformation plus ou moins différentes ; mais on a également indiqué qu'à la place des rondelles, on pourrait utiliser par exemple des lamelles plus ou moins souples et plus ou moins raides formant clapets obturant simultanément ou successivement pour des seuils différents d'effort un ou plusieurs passage(s) à travers la tête du piston.

Avantageusement, de telles lamelles auront la forme de languettes rectilignes ou cruciformes.

Les dispositifs peuvent être à piston traversant ou non ; l'avantage des dispositifs traversants est qu'ils fonctionnent dans les deux sens ; l'avantage des dispositifs non traversants est que la pression de l'élastomère assure automatiquement la fonction de rappel du dispositif après fonctionnement.

## Revendications

1. Dispositif formant amortisseur de chocs et limiteur de mouvement du type utilisant au moins un piston qui se déplace dans un cylindre rempli d'une gomme élastomère sous pression élevée dont l'effet d'amortissement et éventuellement de rappel est essentiellement assuré par la compression de l'élastomère et son laminage dans des passages de sections réduites ménagés dans ledit dispositif pour permettre le passage de la gomme d'un côté à l'autre du piston lors du fonctionnement du dispositif, dispositif comportant en outre des moyens, tels notamment que des clapets qui, lorsqu'ils sont actionnés, réduisent ou laissent libre la section des passages susmentionnés, ledit dispositif étant caractérisé en ce que, au dessus d'un seuil de vitesse déterminé de déplacement du piston dans le cylindre, le dispositif réagit de façon quasi instantanée en délivrant la force maximale d'encaissement qu'il est susceptible de fournir, tandis que pour certaines au moins des valeurs inférieures à ce seuil, le dispositif n'oppose qu'une force minimale de réaction.

2. Dispositif selon la revendication 1 caractérisé en ce qu'entre le seuil maximum et les valeurs de faible niveau d'actionnement, le dispositif présente un seuil intermédiaire de fonctionnement en "amortisseur" pour lequel la section des passages est réduite seulement partiellement par rapport à la réduction de cette section lors du fonctionnement du dispositif à son seuil maximum de fonctionnement.

3. Dispositif selon la revendication 1 ou la revendication 2 caractérisé en ce que lesdits moyens de modification de la section de passages réagissent en fonction des efforts de déformation et/ou de déplacement appliqués sur eux par l'élastomère.

4. Dispositif selon l'une quelconque des revendications précédentes caractérisé en ce que lesdits moyens de modification de la section de passage sont disposés en regard de certains au moins desdits passages (28, 48, 68, 88) ménagés pour que la gomme puisse passer d'un côté à l'autre de la tête du piston (23, 43, 63, 83) lors du fonctionnement du dispositif).

5. Dispositif selon l'une des revendications précédentes caractérisé en ce que la réduction des sections de passage est réalisée au moyen de rondelles ou lamelles élastiques déformables par exemple en acier de plusieurs millimètres d'épaisseur (29, 49, 50, 71, 85).

6. Dispositif selon la revendication 5 caractérisé en ce que, en avant desdites rondelles ou lamelles, est monté un moyen formant bouclier (72, 89), limitant l'action de l'élastomère sur la rondelle au début de sa déformation sur une partie seulement de sa surface, l'élastomère agissant ensuite sur la surface dégagée de la rondelle après fléchissement de celle-ci.

7. Dispositif selon l'une des revendications précédentes caractérisé en ce qu'à partir d'un accroissement d'effort donné, la diminution de la section de passage est limitée, ainsi qu'en correspondance, l'effort encaissé qui est limité à une valeur maximale.

8. Dispositif selon l'une quelconque des revendications précédentes caractérisé en ce qu'après encaissement d'un effort au seuil maximum, il comporte des passages complémentaires agissant en fin de l'action exercée réduisant cet effort.

9. Dispositif selon l'une quelconque des revendications précédentes caractérisé en ce que plusieurs moyens de modification de la section de passage, tels que rondelles ou lamelles formant clapets obturant simultanément ou successivement pour des seuils différents d'effort un ou plusieurs passage(s), sont montés en série ou en parallèle pour déformer à volonté la courbe de fonctionnement du dispositif.

10. Application d'un dispositif selon l'une quelconque des revendications 1 à 8, à la stabilité d'un ouvrage tel qu'un pont de chemin de fer constitué de plusieurs traverses montées bout à bout et reposant sur des piles, caractérisée en ce que les divers tabliers (31, 32) sont réunis entre eux et/ou aux piles (33) par des dispositifs (38) du type précité, dans lesquels lesdits moyens de modification de la section de passage (29) sont ouverts à l'état de repos du pont et obturent lesdits passages (28) dès qu'est dépassé un seuil de vitesse déterminé de déplacement du piston dans son cylindre.

## Patentansprüche

1. Vorrichtung, die einen Stoßdämpfer und einen Bewegungsbegrenzer von der Art bildet, die wenigstens einen Kolben verwendet, der sich in einem Zylinder bewegt, der mit einem unter erhöhtem Druck stehenden Elastomeren gefüllt ist, deren Dämpfungs- und gegebenenfalls Rückstellwirkung im wesentlichen durch die Kompression des Elastomeren und dessen Pressen in Passagen mit verkleinertem Querschnitt in der Vorrichtung, die während des Arbeitens der Vorrichtung den Fluß des Elastomeren von der einen Seite des Kolbens auf dessen andere Seite erlauben, gesichert wird, wobei die Vorrichtung außerdem Mittel aufweist, wie insbesondere Klappenventile, die, wenn sie betätigt werden, den Querschnitt der erwähnten Passagen verringern oder freigeben, wobei die Vorrichtung dadurch gekennzeichnet ist, daß sie oberhalb einer bestimmten Geschwindigkeitsschwelle der Bewegung des Kolbens in dem Zylinder praktisch sofort derart reagiert, daß sie die größte Dämpfungskraft ausübt, die sie liefern kann, während die Vorrichtung für wenigstens einige Werte unterhalb dieser Schwelle nur eine minimale Widerstandskraft entgegensetzt.

2. Vorrichtung nach Anspruch 1, dadurch gekennzeichnet, daß die Vorrichtung zwischen der Maximalschwelle und den Werten auf niedrigem Niveau eine Zwischenschwelle der Funktion als "Dämpfer" bietet, bei der der Querschnitt der Passagen im Vergleich zu der Reduzierung des Querschnitts während der Funktion der Vorrichtung auf ihrem maximalen Schwellenwert nur teilweise reduziert ist.

3. Vorrichtung nach Anspruch 1 oder 2, dadurch gekennzeichnet, daß die Mittel zur Veränderung des Qucrschnitts der Passagen auf die Wirkung von Deformations- oder Verlagerungskräften reagieren, die durch das Elastomere auf sie ausgeübt werden.

4. Vorrichtung nach einem der vorhergehenden Ansprüche, dadurch gekennzeichnet, daß die Mittel zur Veränderung des Querschnitts der Passagen wenigstens teilweise so angeordnet sind, daß die Passagen (28, 48, 68, 88) so ausgerichtet sind, daß das Elastomere während der Arbeit der Vorrichtung von der einen Seite auf die andere Seite des Kolbenkopfes (23, 43, 63, 83) gleiten kann.

5. Vorrichtung nach einem der vorhergehenden Ansprüche, dadurch gekennzeichnet, daß die Reduzierung der Passagenquerschnitte durch elastisch deformierbare Scheiben oder Lamellen beispielsweise aus Stahl mit einer Stärke von mehreren mm bewirkt wird (29, 49, 50, 71, 85).

6. Vorrichtung nach Anspruch 5, dadurch gekennzeichnet, daß vor den Scheiben oder Lamellen ein Mittel angeordnet ist, daß als Schild (72, 89) dient, das die Wirkung des Elastomeren auf die Scheibe zu Beginn ihrer Deformation auf nur einen Teil ihrer Oberfläche begrenzt, wobei das Elastomere dann nach dem Abbiegen der Scheibe auf ihre frei gehaltene Oberfläche wirkt.

7. Vorrichtung nach einem der vorhergehenden Ansprüche, dadurch gekennzeichnet, daß nach Beginn eines gegebenen Kraftanstiegs die Verringerung des Passagenquerschnitts begrenzt wird, wie auch dementsprechend die Dämpfungskraft, die auf einen Maximalwert beschränkt ist.

8. Vorrichtung nach einem der vorhergehenden Ansprüche, dadurch gekennzeichnet, daß sie nach einer Dämpfung auf maximalem Niveau zusätzliche Passagen vorhanden sind, die nach der Beendigung des Vorgangs diese Kraft reduzieren.

9. Vorrichtung nach einem der vorhergehenden Ansprüche, dadurch gekennzeichnet, daß mehrere Mittel für die Veränderung des Passagenquerschnitts, wie Scheiben oder Lamellen, Klappenventile bilden die gleichzeitig oder nacheinander für verschiedene Kraftniveaus eine oder mehrere Passagen schließen, in Reihe oder parallel angeordnet sind, um je nach Bedarf die Verlaufslinie der Vorrichtung zu verändern.

10. Verwendung einer Vorrichtung nach einem der Ansprüche 1 bis 8 für die Stabilität eines Bauwerks, wie einer Eisenbahnbrücke, die aus mehreren aneinanderstoßenden Traversen besteht und auf Pfeilern ruht, dadurch gekennzeichnet, daß die verschiedenen Bahnen (31, 32) unter sich und/oder mit den Pfeilern (31) durch Vorrichtungen (38) der vorgenannten Art verbunden sind, bei denen die Mittel für die Veränderung des Passagenquerschnitts (29) im Ruhezustand der Brücke geöffnet sind und die Passagen (28) abdecken, sobald ein bestimmter Geschwindigkeitsschwellenwert des Kolbens in seinem Zylinder übertroffen wird.

## Claims

1. Device forming a shock absorber and movement limiter of the type using at least one piston which moves in a cylinder filled with an elastomeric gum under high pressure, the damping effect and optionally return effect of which is essentially provided by the compression of the elastomer and its lamination in passages of reduced cross-section provided in the said device to permit the passage of the gum from one side of the piston to the other during the operation of the device, which device additionally includes means such as, in particular, closure members which, when they are actuated, reduce or leave free the cross-section of the above-mentioned passages, the said device being characterized in that, above a specific threshold of speed of displacement of the piston in the cylinder, the device reacts almost instantaneously by delivering the maximum absorption force which it is capable of providing, while for at least some of the values below that threshold the device brings only a minimum reaction force in opposition.

2. Device according to Claim 1, characterized in that between the maximum threshold and the low actuation level values, the device has an intermediate threshold of operation as "damper device" at which the cross-section of the passages is reduced only partially in relation to the reduction of the cross-section during the operation of the device at its maximum operating threshold.

3. Device according to Claim 1 or Claim 2, characterized in that the said means for modification of the cross-section of passages react in response to the deformation and/or displacement stresses applied to them by the elastomer.

4. Device according to any one of the preceding claims, characterized in that the said means for modification of the passage cross-section are arranged opposite at least some of the said passages (28, 48, 68, 88) provided so that the gum can pass from one side of the piston head (23, 43, 63, 83) to the other during the operation of the device.

5. Device according to one of the preceding claims, characterized in that the reduction of the passage cross-sections is effected by means of deformable resilient washers or blades, for example made of steel several millimetres thick (29, 49, 50, 71, 85).

6. Device according to Claim 5, characterized in that, upstream of the said washers or blades there is mounted a means forming a shield (72, 89), limiting the action of the elastomer on the washer at the start of its deformation on only a portion of its surface, the elastomer then acting on the disengaged surface of the washer after the flexing of the latter.

7. Device according to one of the preceding claims, characterized in that, as from a given increase in stress, the reduction of the passage cross-section is limited as, accordingly, is the stress absorbed which is limited to a maximum value.

8. Device according to any one of the preceding claims, characterized in that after the absorption of a stress at the maximum threshold, it has complementary passages acting at the end of the action exerted, reducing that stress.

9. Device according to any one of the preceding claims, characterized in that a plurality of means for modification of the passage cross-section, such as washers or blades forming closure members simultaneously or successively blocking, at different stress thresholds, one or more passages, are mounted in series or in parallel to deform the curve of operation of the device at will.

10. Application of a device according to any one of claims 1 to 8, to the stability of a construction such as a railway bridge constituted by a plurality of cross-beams mounted end to end and resting on piles, characterized in that the various deck members (31, 32) are joined to one another and/or to the piles (33) by devices (38) of the above-mentioned type, in which the said means for modification of the passage cross-section (29) are open in the rest state of the bridge and block the said passages (28) as soon as a specific threshold of the speed of displacement of the piston in its cylinder is exceeded.
